## Europäisches Patentamt

## European Patent Office

## Office européen des brevets

(19)

(11) Veröffentlichungsnummer: **0 066 096
B1**

(12) # EUROPÄISCHE PATENTSCHRIFT

(45) Veröffentlichungstag der Patentschrift:
04.12.85

(21) Anmeldenummer: **82103659.7**

(22) Anmeldetag: **29.04.82**

(51) Int. Cl.⁴: **C 10 B 57/10, F 26 B 7/00**

(54) **Verfahren zur gleichzeitigen thermischen Behandlung mehrerer Kohleströme.**

(30) Priorität: **29.05.81 DE 3121358**

(43) Veröffentlichungstag der Anmeldung:
**08.12.82 Patentblatt 82/49**

(45) Bekanntmachung des Hinweises auf die Patenterteilung:
**04.12.85 Patentblatt 85/49**

(84) Benannte Vertragsstaaten:
**AT BE DE FR GB IT LU NL SE**

(56) Entgegenhaltungen:
**EP - A - 0 064 616
EP - A - 0 064 617
GB - A - 1 005 100
US - A - 3 611 585**

(73) Patentinhaber: **Krupp Koppers GmbH, Altendorfer Strasse 120, D-4300 Essen 1 (DE)**

(72) Erfinder: **Gapp, Janfried, Dr. Dipl.-Ing., Am Tann 3, D-4300 Essen 1 (DE)**
Erfinder: **Gotthard, Ziegan, Dr. Dipl.-Chem., Pastorsacker 40, D-4300 Essen 16 (DE)**

## Beschreibung

Die Erfindung betrifft ein Verfahren zur gleichzeitigen thermischen Behandlung mehrerer Kohleströme, die entweder eine unterschiedliche Zusammensetzung aufweisen oder einer unterschiedlichen thermischen Behandlung unterworfen werden sollen.

Die thermische Behandlung von Kohle, die für die Erzeugung von metallurgischem Koks eingesetzt werden soll, erlangt zunehmende Bedeutung, da durch die Trocknung und/oder Vorerhitzung der Kohle geringere verkokungstechnische Eigenschaften derselben während des anschließenden Verkokungsprozesses ausgeglichen werden können. Andere Vorbehandlungsmethoden, wie z. B. das Stampfen oder das Brikettieren der Kohle verfolgen das gleiche Ziel, jedoch über einen anderen Wirkungsmechanismus. Es ist auch bereits eine Kombination beider Methoden, z. B. das Brikettieren vorerhitzter Kohle vorgeschlagen worden, was bis zu einem gewissen Grade zu einer Addition der Effekte aus beiden Verfahren führt. Es gibt hierbei auch Brikettierverfahren, bei denen nur ein Teil der Einsatzcharge brikettiert wird und dabei für die Brikettierung und den Feinkohleanteil unterschiedliche Kohlemischungen hergestellt werden müssen. Die bisher bekannten Methoden der Vortrocknung/Vorerhitzung bedingen in diesem Fall die Installation von zwei getrennten apparativen Straßen, zumal auch bei beiden Kohlemischungen unterschiedliche Endtemperaturen erreicht werden müssen.

Es liegt jedoch auf der Hand, daß diese getrennte thermische Behandlung beider Kohlemischungen einen hohen Aufwand an Anlage- und Betriebskosten erfordert. Der Erfindung liegt deshalb die Aufgabe zu Grunde, diesen Kostenaufwand durch geeignete Maßnahmen herabzusetzen, wobei die Flexibilität des Verfahrens, insbesondere in bezug auf seine Durchsatzleistung und die Endtemperatur der Kohle, voll erhalten bleiben soll. Das erfindungsgemäße Verfahren soll hierbei nicht nur dort zur Anwendung gelangen können, wo unterschiedliche Kohlen bzw. Kohlemischungen als Vorbehandlung zur Verkokung einer getrennten thermischen Behandlung unterworfen werden müssen, sondern auch überall dort, wo aus sonstigen Gründen eine derartig getrennte thermische Behandlung von zwei oder mehr als zwei Kohleströmen erforderlich ist. Dies kann z. B. der Fall sein, weil die Kohleströme eine unterschiedliche Zusammensetzung aufweisen und vor oder während der thermischen Behandlung nicht miteinander vermischt werden dürfen oder weil die Kohleströme bei gleicher oder unterschiedlicher Zusammensetzung auf eine unterschiedliche Endtemperatur und/oder Restfeuchte gebracht werden sollen.

Aus der GB-A-1 005 100 ist zwar ein Verfahren zur Herstellung von Formkoksen (Heißbriketts) bekannt, bei denen jeweils zwei Kohleströme (Inert- und Backkohle) miteinander in Kontakt gebracht werden, wobei die sogenannte Inertkohle als Wärmeträger dient, der vorher erhitzt worden ist. Nach erfolgter Wärmeübertragung während der Mischung beider Kohleströme werden dabei Endtemperaturen zwischen 300 und 400° C erreicht. Gemäß einer Prozeßvariante dieses Verfahrens kann der Kontakt zwischen den beiden Kohleströmen in einer Wirbelschicht erfolgen. Im Gegensatz zum erfindungsgemäßen Verfahren erfolgt hierbei jedoch eine Vermischung und gemeinsame Behandlung beider Kohleströme, wobei die erzielten Endtemperaturen wesentlich über denen des erfindungsgemäßen Verfahrens liegen, bei dem die eingesetzten Kohlen bei relativ niedrigen Temperaturen schonend behandelt werden sollen und bei dem gegebenenfalls nur ein Teil der Einsatzcharge brikettiert wird, während der andere Teil als Feinkohle erhalten bleibt.

Die US-A-3 611 585 beschreibt einen mehrstufigen Wirbelschichttrockner, der insbesondere zur Trocknung von organischem Material, wie z. B. Kunstharz, oder anorganischen Chemikalien eingesetzt werden soll. Im Gegensatz zum erfindungsgemäßen Verfahren wird hier nur ein einziger Produktstrom behandelt, der die einzelnen Stufen des Wirbelschichttrockners von oben nach unten durchläuft.

Die EP-A-0 064 617 betrifft ein Verfahren und Vorrichtung zum Betrieb einer Kokereianlage, bei der die Koksöfen mit vorerhitzter bzw. vorgetrockneter Kohle beschickt werden und der erzeugte Koks einer sogenannten Kokstrockenkühlung unterworfen wird. Hierbei erfolgt die Vorerhitzung der Einsatzkohle in einem Kaskadenwirbelschichttrockner, der mit einem Teilstrom des Kreislaufgases aus der Kokstrockenkühlung beheizt wird, und in dem die Kohle in einer Wasserdampf-Wirbelschicht vorliegt. Im Gegensatz zum erfindungsgemäßen Verfahren ist in diesem Falle jedoch nur die Behandlung eines einzigen Kohlestroms vorgesehen, der im Wirbelschichttrockner bis auf einen Restwassergehalt von praktisch 0% getrocknet und bis auf eine Temperatur von ca. 200° C erhitzt werden soll.

Die EP-A-0 064 616 beschreibt schließlich einen Kaskadenwirbelschichttrockner, der zum Trocknen und Vorerhitzen von Kokskohle verwendet werden soll. Hierbei ist jedoch ebenfalls nur die Behandlung eines einzigen Kohlestromes vorgesehen, der die einzelnen Kaskaden des Trockners von oben nach unten durchläuft.

Das der Lösung der weiter oben beschriebenen Aufgabe dienende Verfahren zur gleichzeitigen thermischen Behandlung mehrerer Kohleströme ist erfindungsgemäß dadurch gekennzeichnet, daß die Kohleströme getrennt von einander in den Kaskaden eines gemeinsamen Kaskadenwirbelschichttrockners behandelt werden, in dem die erforderliche Wärme indirekt über parallel- oder in Reihe geschaltete, dampf- oder gasbeheizte Wärmeaustauschregister übertragen und die Kohle durch ein gasförmiges Medium verwirbelt wird, das nacheinander alle Kaskaden von unten nach oben durchströmt.

Die Endtemperatur und die Restfeuchte der einzelnen Kohleströme können dabei durch die Durchsatzleistung in der jeweiligen Kaskade sowie durch die Heizleistung des Wärmeaustauschregisters geregelt werden. In Abhängigkeit von der gewünschten Endtemperatur und Restfeuchte kann die Behandlung eines Kohlestromes in einer einzigen oder in mehreren Kaskaden erfolgen. Für die Trocknung des Kohlestromes bis auf eine Restfeuchte von ca. 1 Gew.-% $H_2O$ reicht dabei normalerweise die Behandlung in einer einzigen Kaskade aus, während bei einer Trocknung auf niedrigere Wassergehalte oder sehr hohen Endtemperaturen die Behandlung des Kohlestromes unter Umständen in zwei oder mehr hintereinandergeschalteten Kaskaden angebracht sein kann.

Sofern die einzelnen Kohleströme auf eine unterschiedliche Endtemperatur gebracht werden sollen, ist es ferner zweckmäßig, wenn der Kohlestrom mit der niedrigsten Endtemperatur in der oder den obersten Kaskaden und der Kohlestrom mit der höchsten Endtemperatur in der oder den untersten Kaskaden behandelt wird, da dadurch die Abgastemperatur des für die Verwirbelung der Kohle verwendeten gasförmigen Mediums relativ niedrig gehalten werden kann.

Für die Beheizung der Wärmeaustauschregister der einzelnen Kaskaden können dampf- oder gasförmige Heizmedien, wie z. B. Abhitzedampf oder Rauchgas, verwendet werden. Weiterhin ist es vorteilhaft, die Abwärme aus einer Kokstrokkenkühlung für die Beheizung zu nutzen, sofern eine entsprechende Anlage vorhanden und ein derartiger Verbund möglich ist.

Für die Verwirbelung der Kohle in den einzelnen Kaskaden wird vorzugsweise Wasserdampf eingesetzt, um die Verkokungseigenschaften der Kohle weitestgehend zu schonen. Dieser Wasserdampf wird dabei vorzugsweise im Kreislauf geführt, wobei überschüssiger Wasserdampf, der bei der Trocknung der Kohle anfällt, durch Teilkondensation entfernt wird.

Der zur Durchführung des erfindungsgemäßen Verfahrens verwendete Kaskadenwirbelschichttrockner weist eine der Anzahl der zu behandelnden Kohleströme sowie den Verfahrensbedingungen angepaßte Anzahl von Kaskaden auf, die in einem gemeinsamen Gehäuse übereinander angeordnet sind. Die einzelnen Kaskaden sind jeweils mit einem Wärmeaustauschregister versehen und durch die Anströmböden voneinander getrennt. Diese sind gasdurchlässig, lassen aber andererseits einen Durchtritt der zu behandelnden Kohle nach unten nicht zu. Daher wirken die einzelnen Kaskaden wie getrennte Trocknereinheiten, die von dem gasförmigen Fluidisierungsmedium der Reihe nach von unten nach oben durchströmt werden. In jeder Kaskade ist im Oberteil der Kohleeintrag und im Unterteil der Kohleaustrag vorgesehen. Der Ein- und Austrag der Kohle können hierbei durch die Zellenradschleusen, Schnecken oder ähnliche Einrichtungen erfolgen. Prinzipiell sind Konstruktionen derartiger Kaskadenwirbelschichttrockner bekannt, wozu beispielsweise auf die EP-A-0 064 616 der Anmelderin verwiesen wird.

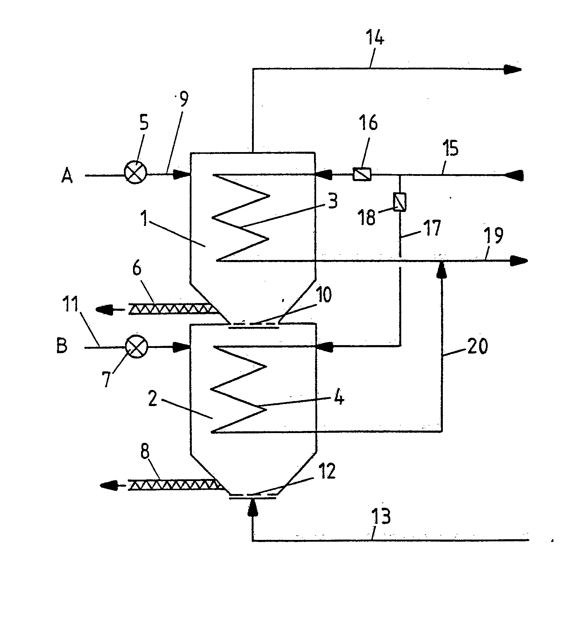

Nachfolgend soll die Erfindung noch mit Hilfe des in der Abbildung dargestellten Fließ-Schemas an einem Ausführungsbeispiel erläutert werden. Selbstverständlich enthält das Fließ-Schema dabei nur die zur Verfahrenserläuterung unbedingt erforderlichen Anlageteile, während Nebeneinrichtungen wie die Teilkondensation von Wasserdampf sowie die Anlagen der Kokerei und ein möglicher Verbund mit einer Anlage zur Kokstrockenkühlung nicht dargestellt sind.

Das Ausführungsbeispiel betrifft die Teilbrikettierung von Kohle zum Zwecke der Vorbehandlung zur Verkokung. Hierbei ist vorgesehen, daß ca. 40 Gew.-% der Gesamtcharge brikettiert werden sollen, wobei dieser Anteil (Kohlesorte B) auf 120° C erwärmt werden soll. Der restliche Teil der Gesamtcharge, der als Feinkohleanteil nicht brikettiert wird, soll auf 90° C erwärmt werden (Kohlesorte A). Die Vortrocknung der Gesamtcharge soll bis auf einen Restfeuchtegehalt von ca. 1 Gew.-% $H_2O$ erfolgen.

Für die Behandlung der Kohlesorte A, die eine niedrigere Endtemperatur als die Kohlesorte B aufweisen soll, ist hierbei die obere Kaskade 1 des zweistufigen Kaskadenwirbelschichttrockners vorgesehen. Über die Leitung 9 und die Zellenradschleuse 5 wird die Kohlesorte A in den Oberteil der Kaskade 1 eingebracht. Die Aufheizung der Kohle in der Kaskade 1 erfolgt im wesentlichen über das Rohrsystem des Wärmeaustauschregisters 3. Die gewünschte Endtemperatur und Endfeuchte der Kohlesorte A lassen sich hierbei durch die Verweilzeit der Kohle in der Kaskade 1 sowie durch die Wärmezufuhr über die Wärmeaustauschregister 3 einstellen. Der Austrag der Kohle aus der Kaskade 1 erfolgt über die Schnecke 6, die im Unterteil derselben oberhalb des Anströmbodens 10 angebracht ist.

In gleicher Weise wird die Kohlesorte B über die Leitung 11 und die Zellenradschleuse 7 in die untere Kaskade 2 eingebracht und dort behandelt. In dieser Kaskade erfolgt die erforderliche Wärmezufuhr über das Rohrsystem des Wärmeaustauschregisters 4. Der Austrag der auf die gewünschte Endtemperatur und Endfeuchte gebrachten Kohle erfolgt über die Schnecke 8, die im Unterteil der Kaskade 2 oberhalb des Anströmbodens 12 angebracht ist.

Die erforderliche Verwirbelung der beiden Kohlesorten A und B in den Kaskaden 1 und 2 erfolgt durch im Kreislauf geführten Wasserdampf, der mit einer Eintrittstemperatur von ca. 200° C über die Leitung 13 und den Anströmboden 12 von unten in die untere Kaskade 2 eingeleitet wird. Der Wasserdampf strömt nach oben und gelangt anschließend über den Anströmboden 10 in die obere Kaskade 1, die er oben mit einer Temperatur von 130° C über die Leitung 14 verläßt. Da der Wasserdampf bei Passieren der Kaskaden 1 und 2 die beim Trocknen der Kohle anfallende Feuchtigkeit aufgenommen hat, muß er anschließend einer im Fließschema nicht dargestellten Teilkondensation unterworfen werden, in der der überschüssige Wasserdampf aus dem Kreislaufstrom entfernt wird. Anschließend erfolgt die Wiederaufheizung und Wiederverdichtung, worauf der Wasserdampf erneut über die Leitung 13 und den Anströmboden 12 in die Kaskade 2 eingeleitet werden kann. Der Druck des Wasserdampfes beim Eintritt in die Kaskade 2 entspricht dabei dem Druckabfall des gesamten Trocknersystems zuzüglich des Leitungswiderstandes bis zum Gebläse.

Der für die Beheizung der Wärmeaustauschregister 3 und 4 erforderliche Wasserdampf wird mit einer Temperatur von ca. 200° C über die Leitung 15 und die Regelklappe 16 dem Wärmeaustauschregister 3 zugeführt. Von der Leitung 15 zweigt vor der Regelklappe 16 die Leitung 17 mit der Regelklappe 18 ab, durch die der für die Beheizung des Wärmeaustauschregisters 4 erforderliche Wasserdampf abgezogen wird. Aus dem Wärmeaustauschregister 3 tritt der Wasserdampf über die Leitung 19 aus, in die die Leitung 20 mündet, die den vom Wärmeaustauschregister 4 kommenden Wasserdampf führt. Wie bereits weiter oben ausgeführt wurde, kann der für die Beheizung der Wärmeaustauschregister 3 und 4 erforderliche Wasserdampf entweder aus dem Abwärmesystem (Abhitzekessel) einer Kokstrockenkühlanlage oder aus einem anderen Dampferzeuger stammen. Alternativ können natürlich die Wärmeaustauschregister 3 und 4 auch mit Rauchgasen oder anderen Wärmeträgern beaufschlagt werden.

Die im vorliegenden Ausführungsbeispiel erfolgte Reduzierung der Kohlevortrocknung von zwei Einheiten auf eine Einheit wirkt sich positiv auf den Energiebedarf, die Investitionskosten sowie die Integrierbarkeit der Vortrocknung innerhalb der Gesamtanlage aus. Die Flexibilität der Anlage bleibt dabei durch die Steuerung der Wärmezufuhr in beiden Kaskaden voll erhalten.

## Patentansprüche

1. Verfahren zur gleichzeitigen thermischen Behandlung mehrerer Kohleströme, die entweder eine unterschiedliche Zusammenstellung aufweisen oder einer unterschiedlichen thermischen Behandlung unterworfen werden sollen, dadurch gekennzeichnet, daß die Kohleströme getrennt voneinander in den Kaskaden eines gemeinsamen Kaskadenwirbelschichttrockners behandelt werden, in dem die erforderliche Wärme indirekt über parallel- oder in Reihe geschaltete, dampf- oder gasbeheizte Wärmeaustauschregister übertragen und die Kohle durch ein gasförmiges Medium verwirbelt wird, das nacheinander alle Kaskaden von unten nach oben durchströmt.

2. Verfahren nach Anspruch 1, dadurch gekennzeichnet, daß die Endtemperatur und die Restfeuchte der einzelnen Kohleströme durch die Durchsatzleistung in der jeweiligen Kaskade sowie durch die Heizleistung des Wärmeaustauschregisters geregelt werden.

3. Verfahren nach den Ansprüchen 1 und 2, dadurch gekennzeichnet, daß die thermische Behandlung der einzelnen Kohleströme in Abhängigkeit von der gewünschten Endtemperatur und Restfeuchte jeweils in einer oder mehreren Kaskaden erfolgt.

4. Verfahren nach den Ansprüchen 1 bis 3, dadurch gekennzeichnet, daß der Kohlestrom mit der niedrigsten Endtemperatur in der oder den obersten Kaskaden und der Kohlestrom mit der höchsten Endtemperatur in der oder den untersten Kaskaden behandelt wird.

5. Verfahren nach den Ansprüchen 1 bis 4, dadurch gekennzeichnet, daß für die Beheizung der Wärmeaustauschregister Abwärme aus der Kokstrockenkühlung verwendet bzw. mitverwendet wird.

6. Verfahren nach den Ansprüchen 1 bis 5, dadurch gekennzeichnet, daß für die Verwirbelung der Kohle Wasserdampf verwendet wird.

7. Verfahren nach den Ansprüchen 1 bis 6, dadurch gekennzeichnet, daß der für die Verwirbelung der Kohle verwendete Wasserdampf im Kreislauf geführt wird, wobei überschüssiger Wasserdampf durch Teilkondensation entfernt wird.

## Claims

1. Process for the simultaneous thermal treatment of several coal streams, which either have different compositions or are to undergo different thermal treatment, characterised in that the coal streams are treated separately from one another in the cascades of a common cascade-type fluidised-bed dryer, in which the necessary heat is transmitted indirectly via steam-heated or gas-heated heat-exchange elements connected in parallel or in series and the coal is fluidised by a gaseous medium, which flows successively through all the cascades from the bottom upwards.

2. Process according to Claim 1, characterised in that the final temperature and residual moisture of the individual coal streams are controlled by the throughput in the particular cascade and by the heating output the heat-exchange element.

3. Process according to Claims 1 and 2, characterised in that the thermal treatment of the individual coal streams takes place as a function of the desired final temperature and residual moisture in any one or sereral cascades.

4. Process according to Claims 1 to 3, characterised in that the coal stream with the lowest final temperature is treated in the topmost cascade or cascades and the coal stream with the highest final temperature is treated in the bottom cascade or cascades.

5. Process according to Claims 1 to 4, characterised in that waste-heat from the coke drycooling system is used or co-used for heating the heat-exchange elements.

6. Process according to Claims 1 to 5, characterised in that steam is used for fluidising the coal.

7. Process according to Claims 1 to 6, characterised in that the steam used for fluidising the coal is circulated, excess steam being removed by partial condensation.

## Revendications

1. Procédé de traitement thermique simultané de plusieurs courants de charbon qui présentent une composition différente ou qui doivent être soumis à un traitement thermique différent, caractérisé par le fait que l'on traite les courants de charbon séparément les uns des autres dans les cascades d'un séchoir commun à couche fluidisée en cascade dans lequel la chaleur nécessaire est transmise indirectement par l'intermédiaire de registres d'échange de chaleur chauffés par vapeur ou par gaz, branchés en parallèle ou en série, et le charbon est amené à tourbilloner par un milieu gazeux qui parcourt successivement toutes les cascades de bas en haut.

2. Procédé selon la revendication 1, caractérisé par le fait que la température finale et l'humidité résiduelle des différents courants de charbon sont réglées par le débit de la cascade dont il s'agit, ainsi que par la puissance de chauffage du registre d'échange de chaleur.

3. Procédé selon les revendications 1 et 2, caractérisé par le fait que le traitement thermique des différents courants de charbon a lieu sous la dépendance de la température finale et de l'humidité résiduelle désirées, chaque fois dans une ou plusieurs cascades.

4. Procédé selon les revendications 1 à 3, caractérisé par le fait que l'on traite dans la ou les cascades supérieures le courant de charbon ayant le plus basse température finale et dans la ou les cascades inférieures le courant de charbon ayant la plus haute température finale.

5. Procédé selon les revendications 1 à 4, caractérisé par le fait que pour le chauffage des registres d'échange de chaleur, on utilise ou qu'on utilise conjointement, de la chaleur passive provenant de refroidissement à sec du coke.

6. Procédé selon les revendications 1 à 5, caractérisé par le fait que pour le tourbillonnement du charbon, on utilise de la vapeur d'eau.

7. Procédé selon les revendications 1 à 6, caractérisé par le fait que l'on recycle la vapeur d'eau utilisée pour le tourbillonnement du charbon en éliminant par condensation partielle la vapeur d'eau en excès.